# EUROPEAN PATENT APPLICATION

(11) **EP 4 492 543 A1**
(43) Date of publication of application: **15.01.2025**
(21) Application number: 24184016.4
(22) Date of filing: 24.06.2024
(51) Int. Cl.: H01M 50/107, H01M 50/152, H01M 50/167, H01M 50/179, H01M 50/186, H01M 50/30, H01M 50/533

(54) **CYLINDRICAL SECONDARY BATTERY AND METHOD FOR FORMING CURRENT COLLECTOR PLATE**

(30) Priority: 05.07.2023 KR 20230087088
(71) Applicant: Samsung SDI Co., Ltd., Yongin-si, Gyeonggi-do 17084 (KR)
(72) Inventor: Park, Hyun Suk, 17084 Yongin-si, Gyeonggi-do (KR); Kwon, Jun Hwan, 17084 Yongin-si, Gyeonggi-do (KR); Yang, Jun Ho, 17084 Yongin-si, Gyeonggi-do (KR); Lee, Tae Yoon, 17084 Yongin-si, Gyeonggi-do (KR); Choi, Woo Hyuk, 17084 Yongin-si, Gyeonggi-do (KR); Kim, Young Ho, 17084 Yongin-si, Gyeonggi-do (KR); Lim, Seung Man, 17084 Yongin-si, Gyeonggi-do (KR); Kang, Bong Geun, 17084 Yongin-si, Gyeonggi-do (KR)
(74) Representative: Gulde & Partner

(57) **Abstract**

Provided is a battery. The battery includes an electrode assembly (120) including a first electrode plate (121), a separator (123), and a second electrode plate (122), a first current collector plate (130) contacting a bottom surface of the electrode assembly (120), and electrically connected to the first electrode plate (121), a second current collector plate (140, 240)contacting a top surface of the electrode assembly (120), and electrically connected to the second electrode plate (122), a case (110) for accommodating the electrode assembly (120), the first current collector plate (130), and the second current collector plate (140, 240), and electrically connected to the second current collector plate (140, 240), and a cap plate (160) for sealing an upper portion of the case (110), wherein the second current collector plate (140, 240) includes a body part (141, 241) coupled to the second electrode plate (122), and a wing part (142, 242) fixed to the body part (141, 241) and the case (110).

## Description

### BACKGROUND

### 1. Field

Embodiments relate to a cylindrical secondary battery.

### 2. Description of the Related Art

In general, a cylindrical secondary battery includes a cylindrical electrode assembly, a cylindrical can for accommodating the electrode assembly and an electrolyte, and a cap assembly coupled to an opening of one side of the can to seal the can, and electrically connected to the electrode assembly to electrically connect an external constitution to the electrode assembly.

Generally, an electrode assembly wound in a cylindrical shape includes a positive electrode base material, such as a positive electrode plate, a negative electrode substrate, such as a negative electrode plate, and a separator. The positive electrode plate is electrically connected to a positive terminal through the positive electrode current collector plate, and the negative electrode plate is electrically connected to a can, which serves as the negative electrode, through the negative current collector plate. Under this structure, the negative electrode plate, the negative current collector plate, and the can are mechanically connected to each other.

In the related art, a negative electrode current collector plate having a plurality of integrated wings, for example, four wings, is known. A method for connecting the wings of the negative electrode current collector plate to a beading part of the can through laser welding, after connecting the negative electrode plate of the electrode assembly to the negative electrode current collector plate through laser welding, has been used. If using such an existing negative electrode current collector plate, welding defects may occur due to dispersion of the total height of the electrode assembly, dispersion of the height of the beading part, and poor positioning of the wings of the negative electrode current collector plate.

The above-described information serves as the background of the present disclosure is only for improving understanding of the background of the present disclosure, and thus may include information that does not constitute the related art.

### SUMMARY

Aspects of some embodiments of the present disclosure provide a cylindrical secondary battery capable of eliminating defects that may occur during welding of a negative electrode current collector plate by improving a structure of the negative electrode current collector plate.

According to some embodiments, a battery (e.g., a cylindrical secondary battery) includes an electrode assembly including (e.g., provided with) a first electrode plate, a separator, and a second electrode plate, a first current collector plate contacting a bottom surface of the electrode assembly, and electrically connected to the first electrode plate, a second current collector plate contacting a top surface of the electrode assembly, and electrically connected to the second electrode plate, a case for accommodating the electrode assembly, the first current collector plate, and the second current collector plate, and electrically connected (e.g., electrically contacted and connected) to the second current collector plate, and a cap plate for sealing an upper portion (e.g., an upper opening) of the case, wherein the second current collector plate includes a body part coupled to the second electrode plate, and a wing part fixed to the body part and the case.

The body part may have a circular plate shape, and the wing part may have a ring shape.

The wing part may include a first coupling part coupled to the body part, a second coupling part coupled to the case, and a connection part configured to connect the first coupling part to the second coupling part.

The second coupling part may be disposed farther from the electrode assembly than the first coupling part in a vertical direction.

The second coupling part may be disposed farther from a radial center than the first coupling part in a radial direction.

The case may include (e.g., may be provided with) a beading part protruding inwardly from an upper portion of the electrode assembly in a radial direction, and the second coupling part may be coupled to an upper portion of the beading part.

The wing part may define (e.g., may include a plurality of) slots extending outwardly from a radial inner end in a radial direction.

The slots may be provided in three or more, and may be radially symmetrical to each other.

The wing part may define (e.g., may include a plurality of) slots extending inwardly from a radial outer end in the radial direction.

The body part may define (e.g., may include) a gas outlet configured to discharge a gas generated in the case.

The case may include (e.g., may be provided with) a beading part protruding inwardly in a radial direction, and an outer edge area of the wing part in the radial direction may be coupled to the beading part.

The case may include (e.g., may be provided with) a crimping part bent inwardly in the radial direction to fix the cap plate, and an outer edge area of the wing part in the radial direction may be disposed between the beading part and the crimping part.

The battery may further include a gasket between the beading part and the crimping part, and surrounding an edge area of the cap plate.

The battery may further include a terminal passing through a lower portion of the case, and including an upper end contacting (e.g., contacting and connecting, in particular, electrically contacting and connecting) the first current collector plate, and a gasket between the terminal and the case.

According to some embodiments a method for forming a second current collector plate of a battery (e.g., the above-described battery), which includes a body part coupled to a second electrode plate, and a wing part fixed to the body part, includes coupling an outer area of the wing part in a radial direction to a case of the battery, and coupling an inner area of the wing part in the radial direction to the body part.

The case may include (e.g., may be provided with) a beading part protruding inwardly in the radial direction. The wing part may include a first coupling part coupled to the body part, a second coupling part coupled to the beading part, and a connection part connecting the first coupling part to the second coupling part. The second coupling part may be coupled to the beading part before the first coupling part is coupled to the body part.

The wing part may have a ring shape defining (e.g., including a plurality of) slots extending outwardly from a radial inner end in the radial direction.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The accompanying drawings are included to provide a further understanding of the present disclosure, and are incorporated in, and constitute a part of, this specification. The drawings illustrate embodiments of the present disclosure and, together with the description, serve to explain aspects of the present disclosure. In the drawings:
FIG. 1 illustrates a perspective view of a cylindrical secondary battery according to embodiments;
FIG. 2 illustrates a cross-sectional view of the cylindrical secondary battery of FIG. 1;
FIG. 3 illustrates an exploded perspective view of a second current collector plate of the cylindrical secondary battery according to embodiments;
FIG. 4 illustrates a perspective view of the second current collector plate of the cylindrical secondary battery according to embodiments;
FIG. 5 illustrates a plan view of a wing part of the second current plate of the cylindrical secondary battery according to embodiments;
FIG. 6 illustrates a view for explaining a process of forming a second current collector plate of a cylindrical secondary battery according to embodiments;
FIG. 7 illustrates a plan view of a wing part of the second current collector plate of the cylindrical secondary battery according to embodiments; and
FIG. 8 illustrates a perspective view of the second current collector plate of the cylindrical secondary battery according to embodiments.

### DETAILED DESCRIPTION

Hereinafter, embodiments will be described in detail with reference to the accompanying drawings.

Embodiments of the present disclosure may be embodied in many different forms, and should not be construed as being limited to the embodiments set forth herein. Rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, processes, operations, members, elements, and/or groups of these, nor exclude the presence or addition of one or more other different shapes, numbers, processes, operations, members, elements, and/or groups of these, or addition of these. The term "and/or" used herein includes any and all combinations of one or more of the associated listed items.

As used herein, terms, such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, used herein for ease of description to describe one element or feature's relationship to another element(s) or feature(s) as illustrated in the figures. These spatially relative terms are intended for easy comprehension of the present disclosure according to various process states or usage states of the present disclosure, and thus, the present disclosure is not limited thereto. For example, an element or feature shown in the drawings is turned inside out, the element or feature described as "beneath" or "below" may change into "above" or "upper". Thus, the term "below" may encompass the term "above" or "below".

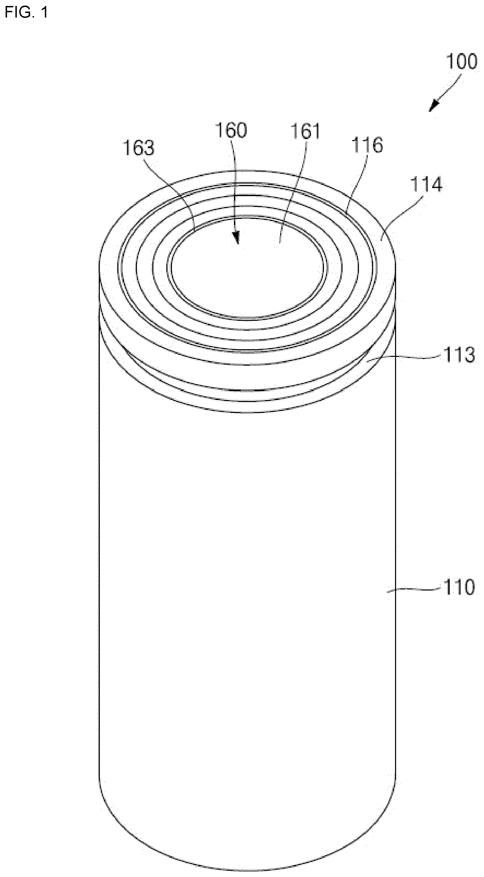

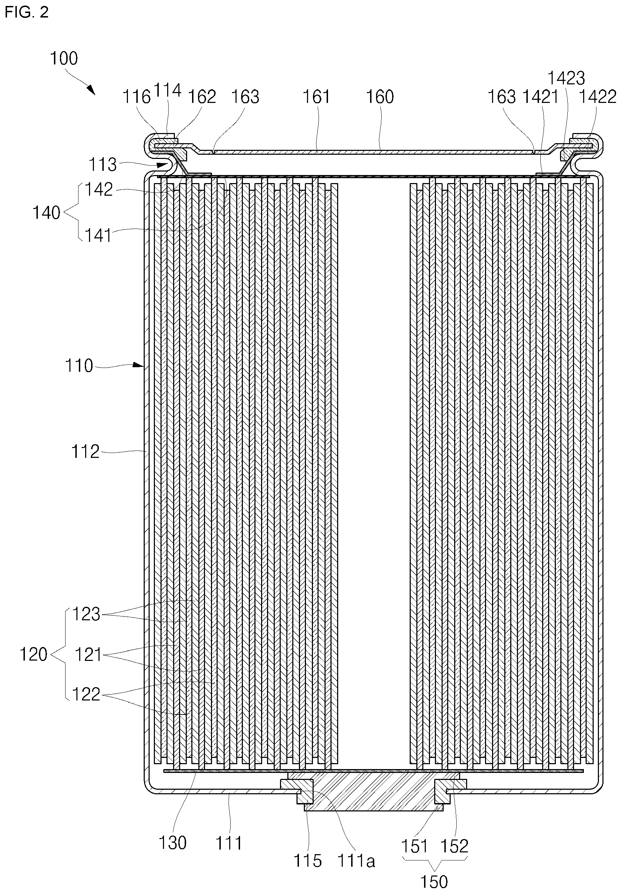

FIG. 1 illustrates a perspective view of a cylindrical secondary battery according to embodiments, and FIG. 2 illustrates a cross-sectional view of the cylindrical secondary battery of FIG. 1.

Referring to FIGS. 1 and 2, a cylindrical secondary battery 100 according to embodiments may include a case 110, an electrode assembly 120 accommodated inside the case 110, a terminal 150 coupled to the case 110 at a terminal hole 111a defined in one end (e.g., a lower end of the case 110), and a cap plate 160 that seals an opening defined in the other end (e.g., an upper end of the case 110).

The case 110 may include a circular bottom part 111 and a side part 112 extending by a length (e.g., a predetermined length) upwardly from an edge of the bottom part 111. The bottom part 111 and the side part 112 of the case 110 may be integrated with each other.

The circular bottom part 111 may have a flat circular plate shape, and may be provided with a terminal hole 111a passing through a central portion thereof. The terminal 150 may be inserted into and coupled at the terminal hole 111a of the bottom part 111. A first gasket 115 for sealing and electrical insulation may be further interposed between the terminal hole 111a and the terminal 150. The first gasket 115 may block contact between the terminal 150 and the case 110 to electrically separate the terminal 150 and the case 110 from each other. The terminal hole 111a of the bottom part 111 of the case 110 may be sealed by the first gasket 115. The first gasket 115 may be made of a resin material, such as polyethylene (PE), polypropylene (PP), polyethylene terephthalate (PET), or the like.

In the cylindrical secondary battery 100, an upper portion of the case 110 may be opened during a manufacturing process. In some embodiments, during the process of manufacturing the cylindrical secondary battery 100, the electrode assembly 120 may be inserted together with an electrolyte through an opened upper end of the case 110. As described above, after the electrolyte and the electrode assembly 120 are inserted into the case 110, the cap plate 160 may be coupled to the opened upper portion to seal the inside of the case 110. The electrolyte may enable movement of lithium ions between a positive electrode plate 121 and a negative electrode plate 122, which constitute the electrode assembly 120. The electrolyte may be a non-aqueous organic electrolyte that is a mixture of lithium salt and a high-purity organic solvent. Furthermore, the electrolyte may be a polymer using a polymer electrolyte or a solid electrolyte, and the type of the electrolyte is not limited here.

The case 110 may be made of steel, a steel alloy, aluminum, an aluminum alloy, or an equivalent thereof, but the material thereof is not limited thereto. In some embodiments, a beading part 113 recessed inwardly may be defined in the case 110 at a lower portion of the case 110 with respect to the cap plate 160 to reduce or prevent the likelihood of the cap assembly being separated to the outside, and a crimping part 114 bent inwardly may be provided at an upper portion of the case 110. After the electrode assembly 120 is inserted through the opened lower end of the case 110, the beading part 113 may be provided to reduce or prevent the likelihood of the electrode assembly 120 being separated from the case 110.

The electrode assembly 120 may include a first electrode plate 121, a second electrode plate 122, and a separator 123. The first electrode plate 121 may be a positive electrode plate, and the second electrode plate 122 may be a negative electrode plate, and vice versa. Hereinafter, for convenience of description, the first electrode plate 121 will be referred to as the positive electrode plate, and the second electrode plate 122 will be referred to as the negative electrode plate.

The first electrode plate 121 may be provided by applying a positive electrode active material made of transition metal oxide on at least one surface of plate-shaped metal foil made of aluminum (Al). In some embodiments, the first electrode plate 121 may be provided with a positive electrode non-coating portion, which is not coated with the positive electrode active material, on a lower end thereof. The positive electrode non-coating portion may protrude downwardly from the electrode assembly 120. In some embodiments, the positive electrode non-coating portion may protrude downwardly further than the second electrode plate 122 and the separator 123.

The second electrode plate 122 may be coated with a negative electrode active material, such as graphite or carbon, on at least one surface of plate-shaped metal foil made of copper (Cu) or nickel (Ni). In some embodiments, the second electrode plate 122 may be provided with a negative electrode non-coating portion, which is not coated with the negative electrode active material, on an upper end thereof. The negative electrode non-coating portion may protrude toward an upper side of the electrode assembly 120. In some embodiments, the negative electrode non-coating portion of the second electrode plate 122 may protrude upwardly further than the first electrode plate 121 and the separator 123.

The separator 123 may be made of a material, such as polyethylene (PE) or polypropylene (PP), but the embodiments are not limited thereto. The separator 123 may be located between the first electrode plate 121 and the second electrode plate 122 to reduce or prevent the likelihood of a short circuit, and to allow only movement of lithium ions.

The electrode assembly 120 may be wound beginning at a winding front end in a substantially cylindrical shape after the first electrode plate 121, the second electrode plate 122, and the separator 123 are stacked. In some embodiments, in the electrode assembly 120, the positive electrode non-coating portion that is not coated with the positive electrode active material may protrude downwardly from the first electrode plate 121, and the negative electrode non-coating portion that is not coated with the negative electrode active material may protrude upwardly from the second electrode plate 122.

A first current collector plate 130 may be a circular metal plate having a shape corresponding to a bottom surface of the electrode assembly 120. A planar size of the first current collector plate 130 may be equal to or less than a size of the bottom surface of the electrode assembly 120. The first current collector plate 130 may be made of aluminum (Al). The first current collector plate 130 may be fixed and electrically connected to the first electrode plate 121, which is exposed to the lower side of the electrode assembly 120, through welding in the state in which the top surface of the first current collector plate 130 contacts the bottom surface of the electrode assembly 120. The first current collector plate 130 may be fixed and electrically connected to the terminal 150 through welding in a state in which the bottom surface of the first current collector plate 130 contacts the top surface of the terminal 150. The first current collector plate 130 may serve as a path for a current flow between the first electrode plate 121 of the electrode assembly 120 and the terminal 150.

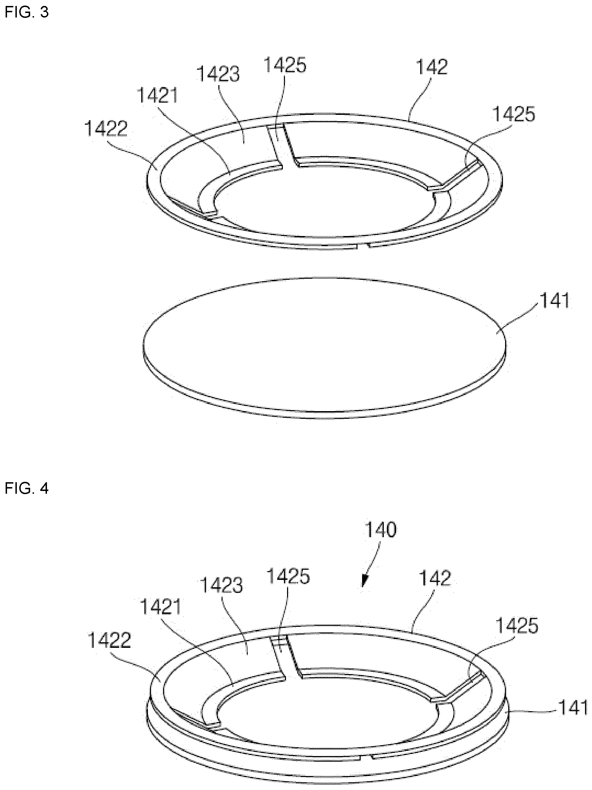

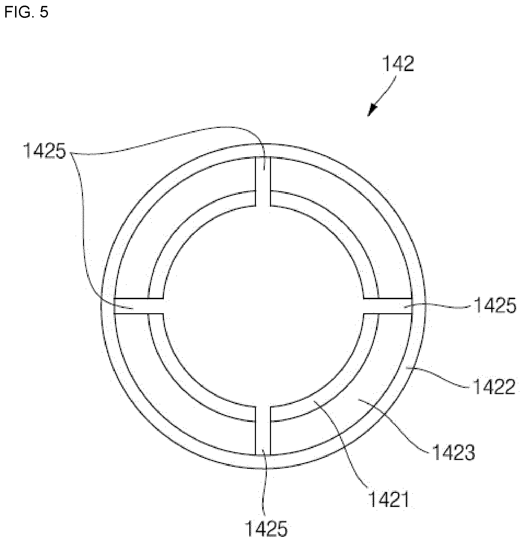

FIGS. 3, 4, and 5 illustrate the second current collector plate of the cylindrical secondary battery according to embodiments. Referring to FIGS. 2, 3, 4, and 5, the second current collector plate 140 may include a circular body part 141 corresponding to a top surface of the electrode assembly 120, and a wing part 142 coupled to the body part 141.

The body part 141 may have a circular plate shape corresponding to the shape of the top surface of the electrode assembly 120, and a bottom surface of the body part 141 may be in contact with the top surface of the electrode assembly 120. The bottom surface of the body part 141 may be fixed and electrically connected to the second electrode plate 122 exposed to the upper side of the electrode assembly 120 by welding in a state of being in contact with the top surface of the electrode assembly 120.

The wing part 142 may have a substantially ring shape, and may be configured to be coupled to the beading part 113 of the case 110 and the body part 141, respectively. The wing part 142 may include a first coupling part 1421 coupled to the body part 141, a second coupling part 1422 coupled to the beading part 113 of the case 110, and a connection part 1423 connecting the first coupling part 1421 to the second coupling part 1422. The first coupling part 1421 may have a ring shape, and a bottom surface of the first coupling part 1421 may be in contact with a top surface of the body part 141. The bottom surface of the first coupling part 1421 may be fixed and electrically connected to the body part 141 by welding in a state of being in contact with the top surface of the body part 141. The second coupling part 1422 may have a ring shape, and a bottom surface of the second coupling part 1422 may be in contact with a top surface of the beading part 113. The bottom surface of the second coupling part 1422 may be fixed and electrically connected to the beading part 113 by welding in a state of being in contact with the top surface of the beading part 113. If welding the first and second coupling parts 1421 and 1422, each of which has the ring shape, the welding, for example, laser welding may be performed along a substantially circular welding line. Referring to FIG. 2, the beading part 113 may be located on the body part 141 to which the first coupling part 1421 is coupled in a vertical direction, and the second coupling part 1422 may be located on the beading part 113 in the vertical direction. In some embodiments, the second coupling part 1422 may be located outside the first coupling part 1421 in a radial direction (e.g., in a horizontal direction) in FIG. 1. The connection part 1423 may connect a radial outer end of the first coupling part 1421 to a radial inner end of the second coupling part 1422. In some embodiments, the connection part 1423 may have a shape that is spread radially outwardly as it moves upward.

Due to the above-described structure, the second current collector plate 140 may serve as a current flow path between the second electrode plate 122 of the electrode assembly 120 and the case 110. In some embodiments, the case 110 may be a negative electrode terminal.

The ring-shaped wing part 142 may be provided with, or may define, a plurality of slits 1425. Referring to FIGS. 3 to 5, each of the slits 1425 may be defined to extend by a length (e.g., predetermined length) from the radial inner end to the radial outer end. In some embodiments, the radial inner end of the ring-shaped wing part 142 may be divided into a plurality of regions by the slits 1425, and the outer portion of the wing part 142 may have a ring-shaped structure that is continuous in a circumferential direction. In some embodiments, the first coupling part 1421 and the connection part 1423 may be divided into a plurality of regions by slits 1425, and the second coupling part 1422 may have a structure continuously extending in the circumferential direction. Three or more slits 1425 may be defined in the wing part 142. In some embodiments, the plurality of slits 1425 in the wing part 142 may be arranged to achieve radial symmetry. The second current collector plate 140 may solve the welding defects due to poor position due to the total height dispersion of the electrode assembly 120, and may solve a welding position deviation due to the height dispersion of the beading part to solve welding position defects due to welding bias.

The terminal 150 may be inserted into a terminal hole 111a provided in the bottom part 111 of the case 110, and may be electrically connected to the first current collector plate 130. In some embodiments, the terminal 150 may be a positive electrode terminal. The terminal 150 and the case 110 may have different polarities. The terminal 150 may be made of the same or similar material as each of the first current collector plate 130 and the first electrode plate 121. In the terminal 150, each of a diameter of a portion of the terminal 150, which is exposed to a lower side of the case 110, and a diameter located inside the case 110, may be greater than that of the terminal 150, which is located in the terminal hole 111a.

The terminal 150 may include a head 151, which is a portion exposed to the lower side of the case 110, and a coupling part 152, which is a portion located inside the case 110 to face the electrode assembly 120. The terminal 150 may be coupled to the terminal hole 111a of the case 110 at a position that is inward from the outside. In some embodiments, the head 151 may be located outside the case 110. In some embodiments, the coupling part 152 may be compressed and deformed (e.g., compressed and molded) by riveting, and thus may be pressed in a state in which the first gasket 115 is interposed in an upper portion of the bottom part 111. In some embodiments, the head 151 may be in close contact with the lower portion of the bottom part 111 with the first gasket 115 therebetween. In some embodiments, the first gasket 115 may be interposed between the terminal 150 and the terminal hole 111a to electrically insulate the terminal 150 and the case from each other, and may seal the terminal 150 and the case 110. The terminal 150 may be electrically connected to the first electrode plate 121 of the electrode assembly 120 through the first current collector plate 130.

Due to the above-described structure, the first current collector plate 130 may serve as a path for the current flow between the first electrode plate 121 of the electrode assembly 120 and the terminal 150. In some embodiments, the terminal 150 may be a positive electrode terminal.

The cap plate 160 may be provided as a circular metal plate, and may be coupled to an upper end of the case 110. A top surface of the cap plate 160 may be exposed to the outside. The cap plate 160 may be coupled to the upper end of the case 110 in a state in which a second gasket 116 is interposed so as to be electrically insulated from the case 110. Because the cap plate 160 is not electrically connected to the positive electrode or the negative electrode of the electrode assembly 120, there may be no separate electrical polarity. The cap plate 160 may be made of aluminum, an aluminum alloy, or equivalent.

The cap plate 160 may include a central area 161 and an edge area 162, and the edge area 162 of the cap plate 160 may be fixed in a state of being located between the beading part 113 of the case 110 and the crimping part 114. In some embodiments, the cap plate 160 may be seated on an upper portion in a state in which the second gasket 116 is located on an upper portion of the beading part 113 of the case 110. Thereafter, the crimping part 114 of the case 110 may be bent to the inside of the cap plate 160 in a radial direction to press the second gasket 116, thereby fixing the cap plate 160 to the case 110. The second gasket 116 may be made of a resin material, such as polyethylene (PE), polypropylene (PP), polyethylene terephthalate (PET), or the like. The second gasket 116 may press the case 110 and the cap plate 160 to seal a gap between the case 110 and the cap plate 160, thereby reducing or preventing the likelihood of the cap plate 160 being separated from the case 110.

The cap plate 160 may include a vent 163 defined in the central area 161 so as to be opened by a breaking pressure. The vent may be a notch defined from a top surface to a bottom surface of the cap plate 160.

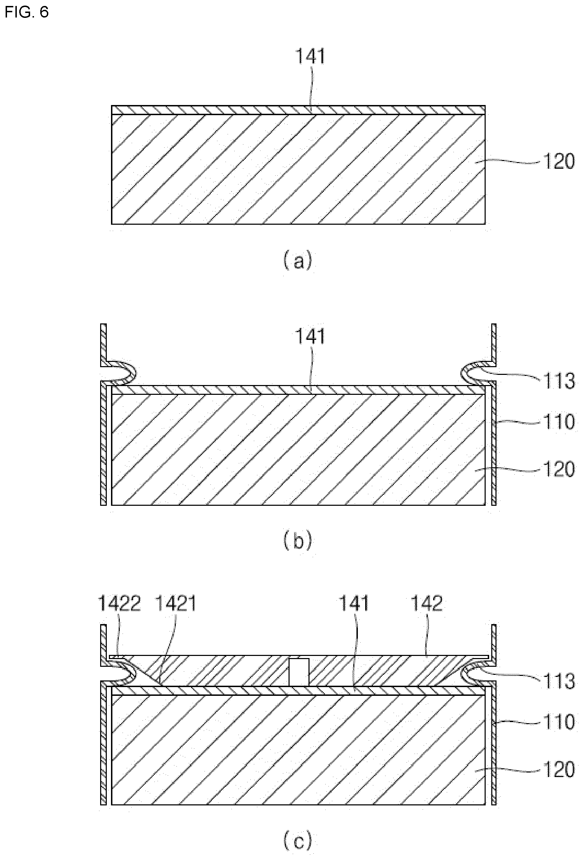

FIG. 6 illustrates a process of forming a second current collector plate 140 through sequential assembly of a body part 141 and a wing part 142 if manufacturing a cylindrical secondary battery. Referring to FIG. 6, a method of forming a second current collector plate (e.g., a negative electrode current collector plate) of a cylindrical secondary battery according to embodiments will be described. As described above, the second current collector plate 140 may be formed by coupling the body part 141 to the wing part 142. As illustrated in FIG. 6(a), the body part 141 may be fixed to the electrode assembly 120 by welding, for example, laser welding. As illustrated in FIG. 6(b), the body part 141 and the electrode assembly 120, which are coupled to each other, may be inserted into the case 110 to form a beading part 113. As illustrated in FIG. 6(c), the wing part 142 may be positioned on the body part 141 and the beading part 113, and may be fixed by welding, for example, laser welding. In some embodiments, in the dual-welding coupling, the welding between the second coupling part 1422 and the beading part 113 may be performed first, and then, the welding the first coupling part 1421 and the body part 141 may be performed. In the fixing of the wing part 142 by the welding, the outer portion of which fixing is suitable (e.g., the second coupling part 1422) may be welded first, and then, the deformable inner portion (e.g., the first coupling part 1421) may be welded. As a result, the total height dispersion of the electrode assembly 120, the height dispersion of the beading part 113, etc. may be absorbed through the slits 1425 and the connection part 1423, and stable and firm welding may be achieved.

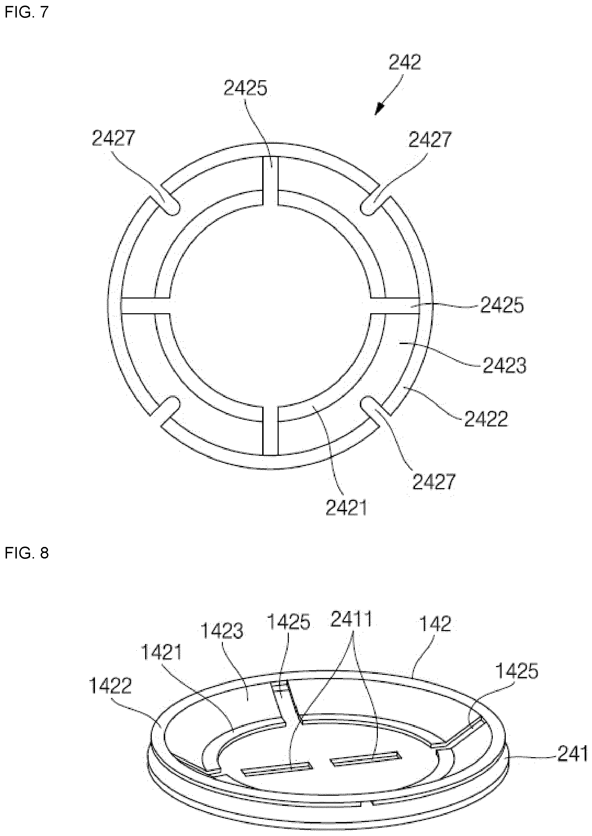

FIG. 7 illustrates a plan view of a wing part 242 of a second current collector plate of the cylindrical secondary battery according to other embodiments. The same names will be described for the same parts as those in the foregoing embodiments, and their duplicated descriptions will be omitted. As in the forgoing embodiments, the wing part 242 may include a first coupling part 2421 for coupling to the body part, a second coupling part 2422 for coupling to the beading part 113, and a connection part 2423 connecting the first and second coupling parts 2421 and 2422 to each other. In some embodiments, a plurality of slits 2425 extending radially outwardly from a radial inner end of the ring-shaped wing part 242 may be defined. In some embodiments, the wing part 242 may further include a plurality of outer slits 2427 extending from a radial outer end to a radial inner side by a length (e.g., predetermined length). For example, referring to FIG. 7, the outer slit 2427 may extend from the radial outer end of the wing part 242 to an intermediate portion of the connection part 2423. Due to the outer slit 2427, the shape of the wing part 242 may be deformed more smoothly to lead to more stable welding.

FIG. 8 illustrates a perspective view of the second current collector plate 240 of the cylindrical secondary battery according to other embodiments. The second current collector plate 240 may include a body part 241 and a wing part 142. Because the wing part 142 is the same as that according to the foregoing embodiments, description thereof will be omitted. The body part 241 may be provided with a gas outlet 2411 for discharging a gas if an internal pressure increases. Referring to FIG. 8, the gas outlet 2411 may have a slit shape, but the gas outlet 2411 may be changed to various shapes, such as a simple hole. The increase in internal pressure within the secondary battery may be reduced or prevented due to the gas outlet 2411.

In some embodiments, because the second current collector plate includes the body part coupled to the second electrode plate of the electrode assembly and the wing parts, which are respectively fixed to the body part and the case, there may be solved the total height dispersion of the electrode assembly, the welding defects due to the height dispersion of the beading part, and the poor positioning of the wing parts of the negative electrode current collector plate.

The above are merely some embodiments of the cylindrical secondary battery, and the present disclosure is not limited to the foregoing. Also, it will be understood by those of ordinary skill in the art that various changes in form and details may be made therein without departing from the scope of the present disclosure as defined by the appended claims, with functional equivalents thereof to be included therein.

## Claims

1. A battery comprising:
an electrode assembly (120) comprising a first electrode plate (121), a separator (123), and a second electrode plate (122);
a first current collector plate (130) contacting a bottom surface of the electrode assembly (120), and electrically connected to the first electrode plate (121);
a second current collector plate (140, 240) contacting a top surface of the electrode assembly (120), and electrically connected to the second electrode plate (122);
a case (110) for accommodating the electrode assembly (120), the first current collector plate (130), and the second current collector plate (140, 240), and electrically connected to the second current collector plate (140, 240); and
a cap plate (160) for sealing an upper portion of the case (110),
wherein the second current collector plate (140, 240) comprises:
a body part (141, 241) coupled to the second electrode plate (122); and
a wing part (142, 242) fixed to the body part (141, 241) and the case (110).

2. The battery as claimed in claim 1, wherein the body part (141, 241) has a circular plate shape, and
wherein the wing part (142, 242) has a ring shape.

3. The battery as claimed in claim 1 or 2, wherein the wing part (142, 242) comprises:
a first coupling part (1421, 2421) coupled to the body part (141, 241);
a second coupling part (1422, 2422) coupled to the case (110); and
a connection part (1423, 2423) configured to connect the first coupling part (1421, 2421) to the second coupling part (1422, 2422).

4. The battery as claimed in claim 3, wherein the second coupling part (1422, 2422) is farther from the electrode assembly (120) than the first coupling part (1421, 2421) in a vertical direction, and/or wherein the second coupling part (1422, 2422) is farther from a radial center than the first coupling part (1421, 2421) in a radial direction.

5. The battery as claimed in claim 3 or 4, wherein the case (110) comprises a beading part (113) protruding inwardly from an upper portion of the electrode assembly (120) in a radial direction, and
wherein the second coupling part (1422, 2422) is coupled to an upper portion of the beading part (113).

6. The battery as claimed in any one of claims 2 to 5, wherein the wing part (142, 242) defines slots extending outwardly from a radial inner end in a radial direction and/or extending inwardly from a radial outer end in the radial direction.

7. The battery as claimed in claim 6, wherein the slots are provided in three or more, and are radially symmetrical to each other.

8. The battery as claimed in any one of the preceding claims, wherein the body part (141, 241) defines a gas outlet (2411) configured to discharge a gas generated in the case (110).

9. The battery as claimed in any one of claims 1 to 4, wherein the case (110) comprises a beading part (113) protruding inwardly in a radial direction, and
wherein an outer edge area (162) of the wing part (142, 242) in the radial direction is coupled to the beading part (113).

10. The battery as claimed in claim 9, wherein the case (110) comprises a crimping part (114) bent inwardly in the radial direction to fix the cap plate (160), and
wherein the outer edge area (162) of the wing part (142, 242) in the radial direction is between the beading part (113) and the crimping part (114).

11. The battery as claimed in claim 9 or 10, further comprising a gasket (116) between the beading part (113) and the crimping part (114), and surrounding an edge area (162) of the cap plate (160).

12. The battery as claimed in any one of the preceding claims, further comprising:
a terminal (150) passing through a lower portion of the case (110), and comprising an upper end contacting the first current collector plate (130); and
a gasket (115) between the terminal (150) and the case (110).

13. A method for forming a second current collector plate (140, 240) of a battery comprising a body part (141, 241) coupled to a second electrode plate (122), and a wing part (142, 242) fixed to the body part (141, 241), the method comprising:
coupling an outer area of the wing part (142, 242) in a radial direction to a case (110) of the battery, and coupling an inner area of the wing part (142, 242) in the radial direction to the body part (141, 241).

14. The method as claimed in claim 13, wherein the case (110) comprises a beading part (113) protruding inwardly in a radial direction,
wherein the wing part (142, 242) comprises a first coupling part (1421, 2421) coupled to the body part (141, 241), a second coupling part (1422, 2422) coupled to the beading part (113), and a connection part (1423, 2423) connecting the first coupling part (1421, 2421) to the second coupling part (1422, 2422), and
wherein the second coupling part (1422, 2422) is coupled to the beading part (113) before the first coupling part (1421, 2421) is coupled to the body part (141, 241).

15. The method as claimed in claim 14, wherein the wing part (142, 242) has a ring shape defining slots extending outwardly from a radial inner end in the radial direction.
